# EUROPÄISCHE PATENTANMELDUNG

(11) **EP 2 213 444 A2**
(43) Veröffentlichungstag der Anmeldung: **04.08.2010**
(21) Anmeldenummer: 10160465.0
(22) Anmeldetag: 19.07.2007
(51) Int. Cl.: B29C 67/24, B29C 45/18, B29C 47/10, B29C 44/34

(54) **Vorrichtung und Verfahren zur Verarbeitung von Duroplasten**

(30) Priorität: 16.08.2006 DE 102006038197
(62) Teilanmeldung aus: 07787710.8
(71) Anmelder: KraussMaffei Technologies GmbH, 80997 München (DE)
(72) Erfinder: Zimmet, Rainer, 74382, Neckarwestheim (DE); Berchtenbreiter, Ernst, 86438, Kissing (DE); Renkl, Josef, 85229, Markt Indersdorf (DE)
(74) Vertreter: Zollner, Richard

(57) **Zusammenfassung**

Die vorliegende Erfindung betrifft ein Verfahren zur Verarbeitung von Duroplasten, insbesondere von duroplastischem Polyurethan sowie eine Vorrichtung zur Durchführung eines solchen Verfahrens. Die Vorrichtung umfasst eine Extrudereinrichtung (10) mit einem Zylinder, in dem eine Extruderschnecke drehbar aufgenommen ist, wobei der Zylinder zumindest eine Einfüllöffnung (12,14,16) und eine Auslassöffnung (18) aufweist und zumindest eine Einfüllöffnung (12) des Zylinders zum Einfüllen von Kunststoffmaterial in den Zylinder vorgesehen ist, sowie ein Werkzeug (22), in das oder durch das das aus dem Extrudereinrichtung ausgetragene Material ein- oder durchführbar ist.

In erfindungsgemäßer Weise weist die Vorrichtung gleiche oder verschiedene Einfüllöffnung zur Zufuhr von zumindest zwei miteinander vernetzenden oder reaktiven Komponente sowie eines weiteren Materials wie eines Füllstoffes auf.

## Beschreibung

Die vorliegende Erfindung betrifft eine Vorrichtung und ein Verfahren zur Verarbeitung von Duroplasten gemäß den Oberbegriffen der Ansprüche 1 bzw. 16.

Unter Duroplast versteht man allgemein thermisch irreversibel (kovalent) vernetzende Makromoleküle mit amorpher Struktur und großer Vernetzungsdichte. Eine thermoelastische Erweichung ist je nach Höhe der zwischenmolekularen Kräfte und Vernetzungsdichte unterschiedlich ausgeprägt. Bei sehr enger Vernetzung ist sie ohne praktische Bedeutung. Insbesondere gehen Duroplaste mit zunehmender Temperatur vom harten Zustand in den Bereich der thermischen Zersetzung über, ohne so weit zu erweichen, dass eine Umformung möglich wäre. Prinzipiell sind Duroplaste unlöslich, aber je nach Vernetzung mehr oder weniger quellbar in geeigneten Medien. Eine Untermenge der Duroplaste bildet das duroplastische Pulyurethan.

Für die vorliegende Erfindung versteht man unter Duroplast auch vernetzende und reaktive Systeme, bei denen zwei verschiedene Komponenten (Komponente A und Komponente B) zusammengefügt werden, welche die Vernetzung oder Reaktion herbeiführen. Als Material-Komponenten für die Verarbeitung sind neben Polyol und Isocyanat somit auch Phenolharz, Polyesterharz, Epoxidharz, Melaminharz oder reaktive Komponeten wie Peroxid zu nennen. Dabei kann die ein oder anderen Komponente evtl. auch in fester Form vorliegen.

Beispielsweise bei der Verarbeitung von duroplastischem Polyurethan werden zwei reaktive Ausgangskomponenten, nämlich eine Polyol-Komponente und eine Isocyanat-Komponente zusammengemischt, die miteinander vermischt ein Reaktionsgemisch ergeben. Dieses Reaktionsgemisch wird nach dem Vermischen in eine Form eines Formwerkzeugs eingebracht und reagiert dort chemisch aus. Diesen Vorgang bezeichnet man oftmals auch als Aufschäumvorgang, wobei zwischen einem kompakten Polyurethan und einem geschäumten Polyurethan zu unterscheiden ist. Der Reaktionsvorgang ist irreversibel und damit anders als bei der Thermoplastverarbeitung nicht umkehrbar. Einmal miteinander ausreagierte Polyol- und Isocyanat-Komponenten können - zumindest mechanisch - nicht wieder getrennt werden, so dass eine Recyclierung in eine neue Polyurethanverarbeitung an sich nicht möglich ist. Möglich ist es lediglich, entsprechende Produkte fein zu zerkleinern (z.B. mahlen) und als Beimischprodukte anderen Komponenten zuzufügen.

Üblicherweise erfolgt die Vermischung der Polyol- und Isocyanat-Komponenten in einem Mischkopf, in dem die beiden Komponenten über Düsen einer Mischkammer zugeführt und dort miteinander vermischt werden.

Am Ausgang der Misch- oder einer Beruhigungskammer kann das so hergestellte Reaktionsgemisch dann in die Kavität eines Formwerkzeugs ausgetragen werden. Dabei unterscheidet man zwischen der Einbringung in ein offenes und ein geschlossenes Formwerkzeug. Bei der Einbringung in ein offenes Formwerkzeug ist die Kavität bei der Einbringung des reaktiven Gemisches zunächst geöffnet und das Reaktionsgemisch wird auf eine Kavitätsfläche aufgetragen. Nach der Ein- oder Aufbringung des reaktiven Gemisches wird die Kavität geschlossen, evtl. das Werkzeug zur Beschleunigung der Reaktion erwärmt und die Aushärtung durchgeführt.

Bei der Einbringung in ein geschlossenes Werkzeug ist die Kavität bereits vor dem Einfüllen des Reaktionsgemisches auf das dem Produkt entsprechenden Maß geschlossen und es erfolgt eine Einfüllung in einen gegenüber der Außenumgebung zumindest im Wesentlichen abgeschlossenen Kavitätsraum.

Eine besondere Art der Polyurethanverarbeitung ist **dadurch gekennzeichnet, dass** Füll-oder Faserstoffe zur Veränderung der physikalischen Eigenschaften, insbesondere der mechanischen Eigenschaften, den Komponenten zugeführt werden. Dabei können beispielsweise Kurzfasern im Bereich von bis zu 0,2 mm einer Komponente beigemischt sein, bevor diese Komponente mit der anderen reaktiven Komponente zusammengebracht wird. Bekannt ist es auch, ein Reaktionsgemisch mit Langfasern herzustellen, bei dem zunächst das Reaktionsgemisch selbst aus der Polyol- und der Isocyanatkomponente in einer Mischkammer hergestellt wird und die geschnittene Langfaser dann am Ausgang der Mischkammer in das Reaktionsgemisch eingebracht wird. Dieser Prozess ist bei der Anmelderin beispielsweise unter der Marke "LFI-PUR" bekannt.

Problematisch bei der Verwendung von Füllstoffen, insbesondere von Langfasern ist jedoch die derzeitig ausschließliche Möglichkeit der Einbringung in ein offenes Formwerkzeug. Bei der Einbringung in ein geschlossenes Formwerkzeug besteht die Gefahr einer Verstopfung der Düsen und Komponenten mittels der Füllstoffe.

Im Gegensatz zur Verarbeitung von Duroplasten wird bei der Verarbeitung von thermoplastischem Kunststoff in der Regel eine Extrudereinrichtung in den verschiedensten Ausführungsvarianten verwendet. Insbesondere dient die Extrudereinrichtung, bei der zumindest eine Schnecke in einem Zylinder drehbar (und evtl. auch axial verschiebbar) aufgenommen ist, der Einbringung von Scheerenergie in das Ausgangsmaterial, was - evtl. zusammen mit einer externen Energieeinbringung zum Aufschmelzen des meist in granulat-, pulver- oder chipform vorliegenden Ausgangsmaterials führt.

Die Verwendung einer Extrudereinrichtung im Zusammenhang mit der Verarbeitung von oben genannten Duroplasten, insbesondere von duroplastischem Polyurethan war bislang jedoch weder bekannt noch angestrebt. Dies auch deshalb, weil bei einem Stopp der Extrudereinrichtung eine Vernetzung (Aushärten) des Reaktionsgemisches in der Extrudereinrichtung zu befürchten war, was zur Funktionsunfähigkeit der Gesamtanlage hätte führen können.

Gelöst werden soll das Problem einer Verarbeitung von Duroplasten gemäß dem oben genannten Verständnis, bei denen zwei reaktive oder Vernetzende Komponenten miteinander vermischt werden, insbesondere von duroplastischem Polyurethan, zusammen mit Füllstoffen (z.B. lange Fasern) und Additiven und insbesondere die Einbringung eines solchen reaktiven Gemisches in ein geschlossenes Werkzeug, ohne dass es zu Funktionsstörungen kommt.

Diese Aufgabe wird durch die in Anspruch 1 genannten Merkmale vorrichtungsmäßig sowie die in Anspruch 16 genannten Merkmale verfahrensmäßig gelöst.

Ein Gedanke der vorliegenden Erfindung ist darin zu sehen, dass zur Verarbeitung von solchen Duroplasten, insbesondere von duroplastischem Polyurethan eine Extrudervorrichtung, umfassend zumindest eine Extruderschnecke sowie einen Extruderzylinder, verwendet wird. Zumindest eine zur späteren Vernetzung notwendige Komponenten, insbesondere reaktive Komponente des duroplastischen Kunststoffes, wird über eine Einfüllöffnung der Extrudereinrichtung zugeführt. Über die gleiche oder weitere Einfüllöffnungen können Füllstoffe jeglicher Art oder Additive jeglicher Zusammensetzung und Form beigemischt werden, wobei durch Drehung der zumindest einen Extruderschnecke in dem Extruderzylinder die Herstellung einer homogen vermischbaren Materialkomponente oder eines entsprechenden Reaktionsgemisches durchgeführt werden kann.

Ausgehend von diesem Grundprinzip gibt es eine Vielzahl von Abwandlungen und Realisierungsmöglichkeiten zur Herstellung des später vernetzenden oder reagierenden Gemisches selbst. So können beispielsweise die Isocyanat- wie auch Polyol-Komponenten - entweder bereits vermischt oder noch zu vermischen - über die gleiche Einfüllöffnung der Extrudereinrichtung zugeführt werden. Alternativ können die beiden reaktiven Komponenten auch über verschiedenen Einfüllöffnungen der Extrudereinrichtung zugeführt werden. Wiederum alternativ ist es auch möglich, lediglich eine reaktive Komponente der Extrudereinrichtung zuzuführen und die zweite reaktive Komponente erst nach der Extrudereinrichtung über eine separate Mischvorrichtung dem Materialstrom zuzusetzen.

Mit der erfindungsgemäßen Vorrichtung lassen sich alle nur erdenklichen Materialien, wie Füllstoffe (Kreide, Kalk, Holz, Recyclingmaterial, Glasfasern, Naturfasern, etc.) und auch Additive beimischen, ohne dass es zu irgendwelchen Verstopfungsproblemen kommt. Überdies können auf diese Weise Drücke aufgebaut werden, die eine Einbringung in eine geschlossenes Werkzeug ermöglichen.

Je nach Ausführungsform wird das Material über die Extrudereinrichtung diskontinuierlich oder kontinuierlich vom Einfüllbereich bzw. von den Einfüllöffnungen in Richtung des Extruderausgangs gefördert und dort ausgetragen. Je nach Viskositätssituation, Betriebsart und gewünschten Drücken ist es möglich, das Materialgemisch unter Zwischenschaltung einer Speichereinrichtung und/oder einer Einspritzeinrichtung einem Formwerkzeug, ähnlich einem Spritzgießwerkzeug, zuzuführen. Die Zufuhr kann dabei - wie im Spritzgießbereich - durch eine Werkzeughälfte oder aber auch in einer Trennfuge erfolgen. Natürlich ist es auch möglich, als Werkzeug ein Profilwerkzeug, durch welche das Material hindurchgeführt wird (beispielsweise Flachdüse, Profilwerkzeug, Runddüse, etc.) und wie es aus der Extrudertechnik bekannt ist, einzusetzen.

Wie auch beim Betrieb einer normalen Extrudervorrichtung ist es vorteilhaft, den Extruderzylinder temperierbar auszubilden. Dabei unterscheidet sich jedoch der Temperierbereich während der Prozessierung gegenüber der Verarbeitung von Thermoplastmaterial erheblich. So ist es vorliegend eventuell sogar notwendig, die Prozesseinheit zu kühlen bzw. die Verarbeitungstemperatur unterhalb von 75°C, insbesondere unterhalb 60°C, vorzugsweise unterhalb von 50°C, einzustellen. Bei diesen Temperaturen ist der Reaktionsvorgang der reaktiven Komponenten derart verlangsamt, dass ein Aushärten während der Prozesszeit nicht zu befürchten ist.

Alternativ zur Verwendung einer Einspritzeinrichtung ist es überdies möglich, zwischen der Extrudereinrichtung und einem Werkzeug eine Zahnradpumpe zum Aufbau eines gewünschten Druckes vorzusehen.

Als besonderes Material, welches dem Extruder zugeführt werden kann, ist auch Wasser oder ein anderes zum Aufschäumen dienendes Material zu erwähnen. Dadurch, dass beispielsweise einem Polyurethangemisch Wasser zugeführt wird, kann bei der Vernetzung oder Ausreaktion im Werkzeug ein Aufschäumprozess gestartet werden, der zu einem aufgeschäumten Produkt (gegenüber einem Kompaktprodukt) führt.

Besonders vorteilhaft ist die Verwendung eines gleichsinnig drehenden Doppelwellenextruders für die Extrudereinrichtung, da damit nicht nur ein hoher Durchsatz sondern auch eine gute Durchmischung erreicht werden kann. Je nachdem, ob die Extrudervorrichtung kontinuierlich oder zyklisch betrieben wird, kann die Zudosierung der reaktiven Komponenten zur Extrudereinrichtung beispielsweise volumetrisch oder gravimetrisch durchgeführt werden.

Besonders Erwähnung finden sollte, dass auch das Werkzeug temperierbar ausgebildet sein sollte. So kann, je nach Ausgangsmaterialien, der Reaktionsprozess insbesondere bei Temperaturen ab 60°C oder ab 75°C in signifikanter Weise beschleunigt werden. Wird die Temperatur im Werkzeug vor, über einen wesentlichen Zeitraum des Einspritzvorganges oder während des Einspritzvorganges des Reaktionsgemisches unterhalb einer solchen materialabhängigen Temperaturschwelle gehalten, so erfolgt kein nennenswertes Ausreagieren des Materialgemisches. Wird die Temperatur dann über die Initialisierungstemperatur von beispielsweise 75°C angehoben, so erfolgt ein relativ schnelles Ausreagieren, womit sehr kurze Reaktionszeiten und damit Entnahme-und Zykluszeiten realisierbar sind. Von besonderem Interesse ist dabei die Verwendung einer hochdynamischen Temperierung (Heizung und/oder Kühlung).

Die vorliegende Erfindung wird nachfolgend anhand von verschiedenen Ausführungsbeispielen und mit Bezugnahme auf die beigefügten Zeichnungen näher erläutert. Die Zeichnungen zeigen in
- Figur 1: eine schematische Seitenansicht einer ersten Ausführungsform einer erfindungsgemäßen Verarbeitungsvorrichtung für duroplastisches Polyurethan, wobei beide reaktiven Ausgangskomponenten über die gleiche Einfüllöffnung zugeführt werden,
- Figur 2: eine schematische Seitenansicht einer zweiten Ausführungsform einer erfindungsgemäßen Verarbeitungsvorrichtung, wobei die beiden reaktiven Komponenten über zwei verschiedene Einfüllöffnungen zugeführt werden,
- Figur 3: eine schematische Seitenansicht einer dritten Ausführungsform einer erfindungsgemäßen Verarbeitungsvorrichtung, wobei eine reaktive Komponente über eine Einfüllöffnung und eine weitere reaktive Komponente nach der Extrudereinrichtung zugeführt werden,
- Figur 4: eine schematische Seitenansicht einer vierten Ausführungsform einer erfindungsgemäßen Verarbeitungsvorrichtung, wobei zusätzlich eine Speichereinrichtung vorgesehen ist und
- Figur 5: eine schematische Seitenansicht einer fünften Ausführungsform einer erfindungsgemäßen Verarbeitungsvorrichtung, wobei zusätzlich zu der Speichereinrichtung noch eine Einspritzeinrichtung vorgesehen ist.

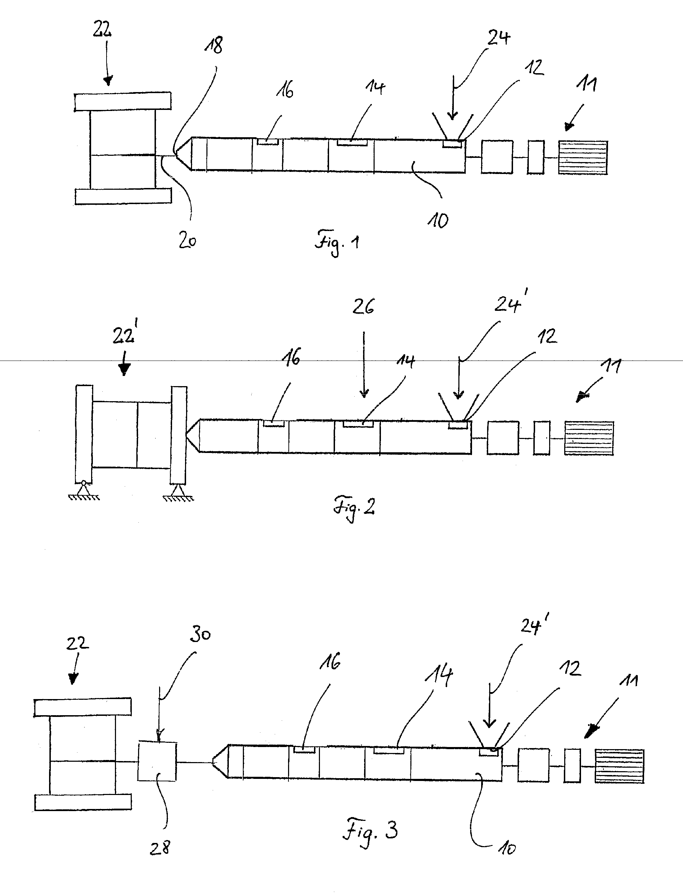

In Figur 1 ist in stark vereinfachter, schematischer Weise eine erste Ausführungsform der vorliegenden Erfindung dargestellt, die als zentrales Element eine Extrudereinrichtung 10 umfasst. Die Extrudereinrichtung (kurz der Extruder) 10 ist vorliegend als gleichsinnig drehender Doppelwellenextruder mit zwei Extruderschnecken (nicht dargestellt) sowie einem die beiden Extruderschnecken umgebenden Extruderzylinder ausgebildet. Die Extrudereinrichtung 10 umfasst mehrere Einfüllöffnungen 12, 14 und 16, über die Materialien, wie später noch beschrieben, den verschiedenen Prozesszonen zugeführt werden können.

Die beiden Extruderschnecken werden über eine Antriebsvorrichtung 11 drehangetrieben, wobei diese Antriebsvorrichtung einen Drehantrieb, beispielsweise in Form eines Elektromotors, sowie ein Getriebe umfasst.

Am strömungsabwärtsseitigen Ende des Extruders wird das in der Extrudereinrichtung 10 prozessierte Material über einen Ausgang 18 an eine Einspritzleitung 20 abgegeben, die den Extruder 10 mit einem Spritzgießwerkzeug 22 verbindet, welches vorliegend ebenfalls nur schematisch dargestellt ist. Natürlich kann die Extrudervorrichtung auch unmittelbar an das Werkzeug angedockt oder andockbar ausgebildet sein.

Da solche Extrudereinrichtungen sowie entsprechende Werkzeuge und die zugehörigen Strömungsverbindungen sowie Nebenaggregate aus der Thermoplastverarbeitung hinreichend bekannt sind, braucht auf die meisten Bauteile bei der vorliegenden Erfindung nicht näher eingegangen werden. Unterschiedlich sollte vor allem die Zufuhr der reaktiven Komponenten zur Extrudereinrichtung ausgeführt sein, die auf die recht geringe Viskosität einer Flüssigkeit abgestellt sein muss. Diesbezüglich kann die Extrudereinrichtung im Einfüllbereich (bei Thermoplast-Material Einzugsbereich) oder bei der Ausbildung eines Anschlusses für eine Zufuhreinrichtung entsprechend angepasst ausgestaltet sein. Auch sollte die Schnecke zur Prozessierung der reaktiven Komponenten ausgestaltet sein, wobei zu berücksichtigen ist, dass möglichst wenig Scheerenergie in das Reaktionsgemisch einzubringen ist.

Bei der in Figur 1 gezeigten Ausführungsform werden die beiden reaktiven Materialkomponenten, nämlich das Isocyanat und die Polyol-Komponente, gemeinsam (Bezugszeichen 24) der Einfüllöffnung 12 zugeführt. Die beiden Komponenten werden dabei verschiedenen Behältern entnommen, über normale Förderpumpen gefördert und kurz vor der Einfüllöffnung miteinander vermengt oder separat der Einfüllöffnung zugegeben.

Stromabwärts der Einfüllöffnung 12 werden über die weiteren Einfüllöffnungen 14 und 16 weitere Materialien, wie Füllstoffe (z.B. Langglasfasern) und Additive (z.B. Katalysatoren) zugeführt.

Die in der Extrudereinrichtung 10 vorgesehenen Schnecken sind dabei für eine gute Vermischung der reaktiven Komponenten und zugeführten Materialien ausgelegt, so dass am Extruderausgang 18 ein homogenes Reaktionsgemisch mit den Füllstoffen den Extruder 10 verlässt.

Dieses reaktive Materialgemisch wird dann der geschlossenen Form des Formwerkzeugs 22 über eine Trennfuge zugeführt, in der es nach dem Zuführen zu einem fertigen Produkt aushärtet.

Entsprechend dem konstruktiven Aufbau gemäß Figur 1 ist vorzugsweise ein zyklischer bzw. diskontinuierlicher Betrieb der Extrudereinrichtung 10 sinnvoll, da nur immer bei einem entleerten und geschlossenen Werkzeug das Reaktionsgemisch in die Kavität des Werkzeugs 22 eingefüllt werden kann. Nach der vollständigen Füllung des Werkzeugs sollte die Förderung gestoppt werden, so dass das Produkt im Werkzeug aushärten kann, bevor es entnommen wird und ein neuer Zyklus gestartet werden kann. Theoretisch ist es auch möglich die Extrudereinrichtung 10 bei abgeschalteter Zufuhr von Stoffen weiter drehen zu lassen, falls dies das Reaktionsgemisch bzw. die darin enthaltenen Stoffe nicht schädigt.

Aufgrund der Verwendung einer Extrudervorrichtung für die Einbringung eines Füllstoffes können auch Langfasern problemlos verwendet werden, ohne dass sich irgendwelche Düsen zusetzen oder verstopfen.

Auch muss man bei einer geeigneten Betriebsweise kein Aushärten des Polyurethanmaterials in der Extrudervorrichtung selbst befürchten. Während der Prozessierung sollte die Extrudereinrichtung 10 temperiert, insbesondere gekühlt sein, so dass man prozesstechnisch in einem Temperaturbereich von beispielsweise unterhalb 60°C fährt, in dem das Ausreagieren des Reaktionsgemisches sehr langsam vor sich geht.

Sollte der Extruderbetrieb mittel- oder langfristig unterbrochen werden, so kann die Zufuhr eine der reaktiven Komponenten zur Einfüllöffnung gestoppt werden, so dass sich kein Reaktionsgemisch mehr in der Extrudervorrichtung selbst befindet. Damit kann auch bei einem mehrstündigen oder mehrtägigen Stop das in der Extrudereinrichtung befindliche Material nicht aushärten, so dass keine Festsetzung der Extruderschnecken in der Extrudervorrichtung befürchtet werden muss. Alternativ oder zusätzlich kann die Extrudereinrichtung bei einem längeren Stop mit einem zusätzlichen Spülmittel gespült werden, so dass es frei ist von sämtlichen Reaktionsstoffen.

Die Ausführungsform in Figur 2 unterscheidet sich von derjenigen in Figur 1 dadurch, dass die beiden reaktiven Komponenten nun nicht mehr über eine und die gleiche Einfüllöffnung zugeführt werden, sondern über zwei verschiedene Einfüllöffnungen, nämlich die Einfüllöffnung 12 und die Einfüllöffnung 14. So wird vorliegend die Polyol-Komponente 24' über die Einfüllöffnung 12 und die Isocyanat-Komponente über die Einfüllöffnung 26 zugeführt. Ansonsten kann die Prozessvorrichtung in gleicher Weise betrieben werden. Lediglich das Werkzeug unterscheidet sich vorliegend, wobei in Figur 1 ein Vertikalwerkzeug in Figur 2 ein Horizontalwerkzeug 22' verwendet wird. Auch erfolgt im Gegensatz zur Ausführungsform der Fig. 1 die Zugabe ins Werkzeug 22' durch eine Werkzeughälfte hindurch erfolgt. Dies hat jedoch für die vorliegende Erfindung keinerlei Bedeutung.

Eine weitere Ausführungsform ist in Figur 3 dargestellt, wobei sich diese Ausführungsform dadurch unterscheidet, dass der Extrudereinrichtung 10 lediglich eine einzige reaktive Komponente, vorliegend nämlich die Polyol-Komponente 24', zugeführt wird. Die weitere reaktive Komponente, vorliegend die Isocyanat-Komponente 30, wird erst nach dem Ausgang der Extrudereinrichtung 10 über ein separates Mischelement 28 zugeführt und der Mischung beigegeben. Diese Mischvorrichtung kann beispielsweise ein statischer Mischer sein. Zwar wird bei einer solchen Vorrichtung nicht das Reaktionsgemisch selbst in der Extrudereinrichtung gut gemischt erzeugt. Es können aber Füllstoffe homogen in eine reaktive Komponente eingemischt werden. Zudem muss bei einem erneuten Anfahren nach einem längeren Stopp nicht der gesamte Inhalt der Extrudereinrichtung entfernt werden, sie dies erforderlich ist, wenn beide reaktiven Komponenten über ein und dieselbe Einfüllöffnung zugeführt werden und vor einem Abstellen der Vorrichtung die Zufuhr einer Komponente gestoppt wird.

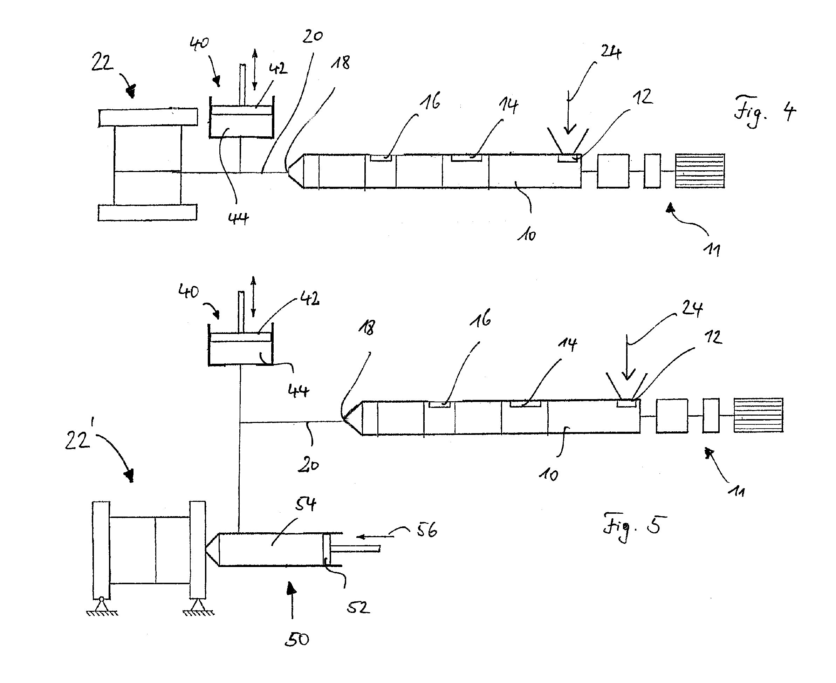

In Figur 4 ist eine weitere Ausführungsform der vorliegenden Erfindung in schematischer Weise dargestellt, wobei entsprechend Figur 1 wiederum über die Einfüllöffnung 12 die beiden reaktiven Komponenten zugeführt werden. Allerdings ist nun zwischen der Extrudereinrichtung 10 und dem Spritzgießwerkzeug 22 eine Speichereinrichtung 40 eingefügt, und mit der Leitung 20 verbunden. Die Speichereinrichtung 40 umfasst einen hin und her beweglichen Speicherkolben 42, der je nach Bewegung ein entsprechend großes Speichervolumen 44 definiert.

Mit einer solchen Konstruktion kann man die Extrudereinrichtung 10 trotz des diskontinuierlichen Betriebes des Spritzgießwerkzeugs 22 kontinuierlich betreiben. Natürlich ist dazu eine Absperrmöglichkeit zwischen der Speichereinrichtung 40 und der Spritzgießeinrichtung 22 vorzusehen, was vorliegend nicht dargestellt ist. Für den Zeitraum, in dem kein Material in das Formwerkzeug einzufördern ist, erfolgt eine Zwischenspeicherung des in der Extrudereinrichtung 10 kontinuierlich erzeugten Material im Speichervolumen 44. Ist dann das Reaktionsgemisch in die Kavität einzuspritzen, so erfolgt eine gleichzeitige Förderung aus der Extrudereinrichtung 10 sowie dem Speicher 40 über die Einspritzleitung 20 in die Kavität des Spritzgießwerkzeuges.

Eine letzte Ausführungsform ist in Figur 5 dargestellt, wobei sich diese Ausführungsform gegenüber der Ausführungsform in Figur 4 dadurch unterscheidet, dass nunmehr zwischen der Speichervorrichtung 40 und dem Werkzeug 22' eine eigene Einspritzeinrichtung für die Generierung eines hohen Einspritzdruckes dargestellt ist. Diese Einspritzeinrichtung umfasst einen in einem Zylinder geführten Einspritzkolben 52, der mittels einer nicht dargestellten Antriebseinrichtung entsprechend dem Pfeil 56 mit einem bestimmten Druck in Einspritzrichtung beaufschlagt werden kann. Je nach Stellung des Einspritzkolbens wird ein Einspritzvolumen 54 definiert. Bei diesem Verfahren wird das Polyurethangemisch über die Speichereinrichtung 40 zwischengepuffert und diskontinuierlich der Einspritzeinrichtung 50 zugeführt. Die Einspritzeinrichtung 50 ist dafür ausgebildet, um das reaktive Polyurethangemisch mit einem entsprechend hohen Druck in das Spritzgießwerkzeug einzubringen. Dabei sollte die Einspritzvorrichtung 50 möglichst ohne Todräume ausgebildet werden, in denen sich das Polyurethangemisch festsetzen und ausreagieren kann. Vielmehr sollte die Einspritzeinrichtung bei vollkommen vorverschobenem Kolben 52 einen im wesentlichen verschwindenden Speicherraum 54 besitzen. Natürlich müssten auch bei dieser Ausführungsform wieder entsprechende Ventile und Absperreinheiten vorgesehen sein, die je nach Betrieb der Anlage ein Zurückströmen des Materials entweder in die Extrudervorrichtung 10, die Speichereinrichtung 40 etc. verhindern. Diese Einrichtungen sind aus dem Stand der Technik bekannt, da die oben beschriebene Vorrichtung generell zur Verarbeitung von Thermoplastmaterial eingesetzt wird.

Insgesamt eignet sich die Vorrichtung für Prozessierung von mit Füllstoffen und/oder Additiven versetztem Polyurethan, insbesondere, wenn man eine Misch- oder Scheertemperatur von nicht mehr als 75°C einstellt. Dabei können Drücke von bis zu 60 bar mit der Extrudereinrichtung alleine sichergestellt werden. Wie eingangs bereits erwähnt, kann durch die Zufuhr von Wasser zur Extrudereinrichtung 10 ein Schäumen des Polyurethans im Spritzgießwerkzeug erreicht werden. Insofern kann man durch Zuschalten oder Abstellen der Wasserzufuhr einstellen, ob geschäumt wird oder nicht.

Auch eignet sich die vorliegende Konstruktion zur Realisierung eines hohen Durchsatzes, hierzu muss die Extrudervorrichtung lediglich schneller gedreht werden. Insgesamt ist es vorstellbar, dass man mit nur zwei Extrudergrößen nahezu alle Anwendungen im Polyurethanbereich abdecken kann.

Auch die Zugabe von Füllmaterial oder Additiven nach Zusammensetzung und Form ist nahezu unbeschränkt möglich; so kann auch ein vorher gemahlenes PUR-Recyclat als Zugabemittel verwendet werden.

Natürlich ist es auch möglich, anstelle eines Spritzgießwerkzeuges ein an sich bekanntes Extrusionswerkzeug zu verwenden, durch welches das Reaktionsgemisch am Extruderausgang kontinuierlich hindurchgedrückt wird. Als solches Extruderwerkzeug bieten sich beispielsweise ein Profilwerkzeug, eine Breitschlitzdüse, eine Rohrdüse etc. an.

Eine besondere Ausführungsform ist **dadurch gekennzeichnet, dass** das Werkzeug insbesondere das Spritzgießwerkzeug hochdynamisch temperierbar ist. Der Vorteil eines solchen Werkzeugs ist dann klar, wenn man weiß, dass sich die Reaktionszeit sprunghaft verkürzen lässt, wenn man (materialabhängig) eine bestimmte Temperatur, beispielsweise 75°C, übersteigt. Damit ist es möglich, Verfahren durchzuführen, bei denen die Gemischbildung des reaktiven Gemisches im Bereich unterhalb einer solchen Aktivierungstemperatur geschieht, bei der das Reaktionsgemisch auch in das Werkzeug eingebracht wird. Erst nach dem Einbringen des Reaktionsgemisches in das Werkzeug wird die Temperatur sprunghaft über den vorgenannt erwähnten Temperaturwert angehoben, so dass das Ausreagieren unmittelbar und schlagartig erfolgt. So ist es möglich, die Heizzeit mittels der sehr neuen Anwendung einer Beheizung des Werkzeugs mittels eines elektrisch heizbaren Keramikwerkstoffes zu auf wenige Sekunden verkürzen. Ein solcher elektrisch heizbarer Keramikwerkstoff lässt sich beispielsweise innerhalb von 5 bis 10 Sekunden von einer Temperatur von 70 °C auf 125 °C aufheizen. Auf diese Weise könnten die heute üblichen Zykluszeiten von über 1 Minute bis in den Bereich von wenigen Sekunden gesenkt werden, was zu einer erheblichen Steigerung der Produktivität führen würde.

Insgesamt ist mit der vorliegenden Erfindung eine problemlose Verarbeitung von oben genannten Duroplasten möglich, bei denen zwei miteinander vernetzende oder reagierende Komponenten vermischt werden und zu denen auch Materialien wie Polyester mit einem Härter, Silikonkautschuk mit Silan versetzt und insbesondere auch das aus Isocyanat und Polyol bestehende Polyurethan zählen.

### Bezugszeichenliste

- 10: Extrudereinrichtung
- 11: Antriebseinrichtung
- 12: Erste Einfülleinrichtung
- 14: Zweite Einfülleinrichtung
- 16: Dritte Einfülleinrichtung
- 18: Extruderauslass
- 20: Einspritzleitung
- 22, 22': Werkzeug
- 24: Polyol- und Isocyanat-Komponenten
- 24': Polyolkomponente
- 26: Isocyanatkomponente
- 28: Mischelement
- 30: Isocyanatkomponente
- 40: Speichereinrichtung
- 42: Speicherkolben
- 44: Speichervolumen
- 50: Einspritzeinrichtung
- 52: Einspritzkolben
- 54: Einspritzvolumen
- 56: Einspritzrichtung/Einspritzdruck

## Patentansprüche

1. Vorrichtung zur Verarbeitung von Duroplasten, insbesondere duroplastischem Polyurethan, wobei zwei eine Vernetzung oder Reaktion verursachende Komponenten miteinander vermischt werden, umfassend
- eine Extrudereinrichtung mit einem Zylinder, in dem zumindest zwei Extruderschnecken drehbar aufgenommen sind, wobei der Zylinder zumindest eine Einfüllöffnung und eine Auslassöffnung aufweist,
wobei
- eine oder mehrere Einfüllöffnungen zur Zufuhr von zumindest zwei miteinander vernetzenden oder reagierenden Komponenten eines Duroplasten ausgebildet sind, so dass die zumindest zwei Komponenten über getrennte oder über eine gemeinsame Einfüllöffnung dem Inneren des Zylinders zuführbar sind,
- eine der vorgenannten oder eine weitere Einfüllöffnung zur Zufuhr zumindest eines Materials, insbesondere von Füllstoffen, vorzugsweise Fasern, vorgesehen ist und
- die Extruderschnecke zur Verarbeitung der zumindest zwei miteinander vernetzenden oder reagierenden Komponenten zusammen mit dem Füllstoff ausgebildet sind.

2. Vorrichtung nach Anspruch 1,
**dadurch gekennzeichnet,**
**dass** strömungsmäßig nach der Auslassöffnung des Zylinders eine Vorrichtung zur Zufuhr einer vernetzenden oder reaktiven Komponente eines Duroplasten vorgesehen ist.

3. Vorrichtung nach einem der vorhergehenden Ansprüchen,
**dadurch gekennzeichnet,**
**dass** der Zylinder temperierbar ausgebildet ist.

4. Vorrichtung nach Anspruch 3,
**dadurch gekennzeichnet,**
**dass** eine Verarbeitungstemperatur im Zylinder von weniger als 75 °C vorzugsweise weniger als 60 °C, insbesondere weniger als 50 °C einstellbar ist

5. Vorrichtung nach einem der vorhergehenden Ansprüche,
**dadurch gekennzeichnet,**
**dass** strömungsmäßig nach dem Extruder eine Speichereinrichtung zur zumindest zeitweisen zwischenspeichernden Aufnahme des aus dem Extruder ausgetragenen Materials ausgebildet ist.

6. Vorrichtung nach einem der vorhergehenden Ansprüche,
**dadurch gekennzeichnet,**
**dass** zwischen der Extrudereinrichtung und dem Werkzeug eine Zahnradpumpe angeordnet ist.

7. Vorrichtung nach einem der vorhergehenden Ansprüche,
**dadurch gekennzeichnet,**
**dass** zwischen der Extrudereinrichtung und dem Werkzeug eine Einspritzeinrichtung angeordnet ist.

8. Vorrichtung nach einem der vorhergehenden Ansprüche,
**dadurch gekennzeichnet,**
**dass** eine Einlassöffnung als Anschluss für eine Wasserzufuhr ausgebildet ist.

9. Vorrichtung nach einem der vorhergehenden Ansprüche,
**dadurch gekennzeichnet,**
**dass** als Extrudereinrichtung eine gleichsinnig drehende Doppelwellenextruder verwendet ist.

10. Vorrichtung nach einem der vorhergehenden Ansprüche,
**dadurch gekennzeichnet,**
**dass** zumindest einer Einfüllöffnung eine Dosiervorrichtung zugeordnet ist, mit der eine volumetrische oder gravimetrische Dosierung der vernetzenden oder reaktiven Komponente ermöglicht ist.

11. Vorrichtung nach einem der vorhergehenden Ansprüche,
**dadurch gekennzeichnet,**
**dass** das Werkzeug zur Initiierung des Reaktionsvorganges temperierbar ist.

12. Vorrichtung nach Anspruch 11,
**dadurch gekennzeichnet,**
**dass** das Werkzeug auf eine Temperatur von 60°C bis 100 °C temperierbar ist.

13. Vorrichtung nach Anspruch 11 oder 12,
**dadurch gekennzeichnet,**
**dass** die Temperierung des Werkzeugs bauteilspezifisch einstellbar ist.

14. Verfahren zum Herstellen eines duroplastischen Produktes, insbesondere eine Polyurethan-Produktes mit den Schritten,
- Zufuhr von zumindest zwei vernetzenden oder reaktiven Komponente des Duroplasten zu einer Extrudereinrichtung,
- Zufuhr noch weitere Materialien, wie Füllstoffe oder Additive
- Herstellen einer vernetzenden oder reaktiven Mischung durch Vermischen und Homogenisieren der zumindest zwei vernetzenden oder reaktiven Komponenten sowie der zumindest weiteren Materials und
- Ein- oder Durchführung der reaktiven Mischung in oder durch ein Werkzeug.

15. Verfahren nach einem der Ansprüche 14,
**dadurch gekennzeichnet,**
**dass** die Extrudervorrichtung geheizt und/oder gekühlt wird.

16. Verfahren nach Anspruch 15,
**dadurch gekennzeichnet,**
**dass** die Temperierung auf eine Temperatur unterhalb von 75 °C, insbesondere unter 60 °C, vorzugsweise unter 50°C erfolgt.

17. Verfahren nach einem der Ansprüche 14 bis 16,
**dadurch gekennzeichnet,**
**dass** der Extrudervorrichtung Wasser zugeführt wird.

18. Verfahren nach einem der Ansprüche 14 bis 19,
**dadurch gekennzeichnet,**
**dass** mittels einer Zahnradpumpe oder einer Einspritzvorrichtung nachfolgen der Extrudervorrichtung das Austragsmaterial auf ein vorbestimmtes Druckniveau gebracht wird

19. Verfahren nach einem der Ansprüche 14 bis 18,
**dadurch gekennzeichnet,**
**dass** zumindest eine vernetzende oder reaktive Komponente der Extrudereinrichtung gravimetrisch oder volumetrisch zudosiert wird.

20. Verfahren nach einem der Ansprüche 14 bis 19,
**dadurch gekennzeichnet,**
**dass** als Werkzeug ein temperierbares Spritzgusswerkzeug mit zumindest einer Kavität verwendet wird und die Temperatur der Kavitätswand des Werkzeugs nach dem Einspritzvorgang auf einen Temperaturwert angehoben wird, der den Vernetzungs- oder Reaktionsvorgang initialisiert.

21. Verfahren nach Anspruch 20,
**dadurch gekennzeichnet,**
**dass** eine Temperatur im Bereich von 60 ° C bis 100° C gewählt wird.
